# NOUVEAU FASCICULE DE BREVET EUROPEEN

(11) **EP 0 236 246 B2**
(45) Date de publication et mention de la décision concernant l'opposition: **30.06.1993**
(45) Mention de la délivrance du brevet: 08.11.1989
(21) Numéro de dépôt: 87420052.0
(22) Date de dépôt: 23.02.1987
(51) Int. Cl.: C21C 7/00, B23K 35/40

(54) **Produit composite à enveloppe tubulaire, contenant une matière compactée, pour le traitement des métaux liquides, et procédé de réalisation de ce produit**
Mischstoff innerhalb einer rohrförmigen Umhüllung enthaltend einen verdichteten Stoff zur Behandlung flüssiger Metalle und Verfahren zu seiner Herstellung
Mixed product in a tubular envelope containng a compacted material for treatment of liquid metals and process for its production

(30) Priorité: 24.02.1986 FR 8603295
(43) Date de publication de la demande: 09.09.1987
(73) Titulaire: VALLOUREC, F-92100 Boulogne-Billancourt (FR)
(72) Inventeur: Douchy, Michel, F-59730 Solesmes (FR); Vachiery, Edmond, F-59730 Solesmes (FR)
(74) Mandataire: Desolneux, Jean-Paul Charles

(56) Documents cités:
- EP-A- 118 378
- EP-A- 158 693
- EP-A- 0 034 994
- BE-A- 657 027
- FR-A- 71 791
- FR-A- 1 471 221
- FR-A- 1 512 351
- FR-A- 2 433 584
- GB-A- 836 296
- GB-A- 2 075 380
- JP-A-60 124 495
- LU-A- 31 206
- LU-A- 79 445
- NL-A- 7 800 646
- US-A- 1 588 761
- US-A- 2 055 771
- US-A- 3 036 205
- US-A- 3 542 998
- US-A- 3 915 693
- US-A- 4 086 463
- US-A- 4 137 446
- US-A- 4 364 770

## Description

Le produit composite à enveloppe tubulaire ainsi que son procédé de réalisation, qui font l'objet de l'invention, concernent le traitement des métaux liquides et en particulier des aciers liquides.

Des produits composites pour de telles applications sont déjà connus, en particulier par les documents ci-après.

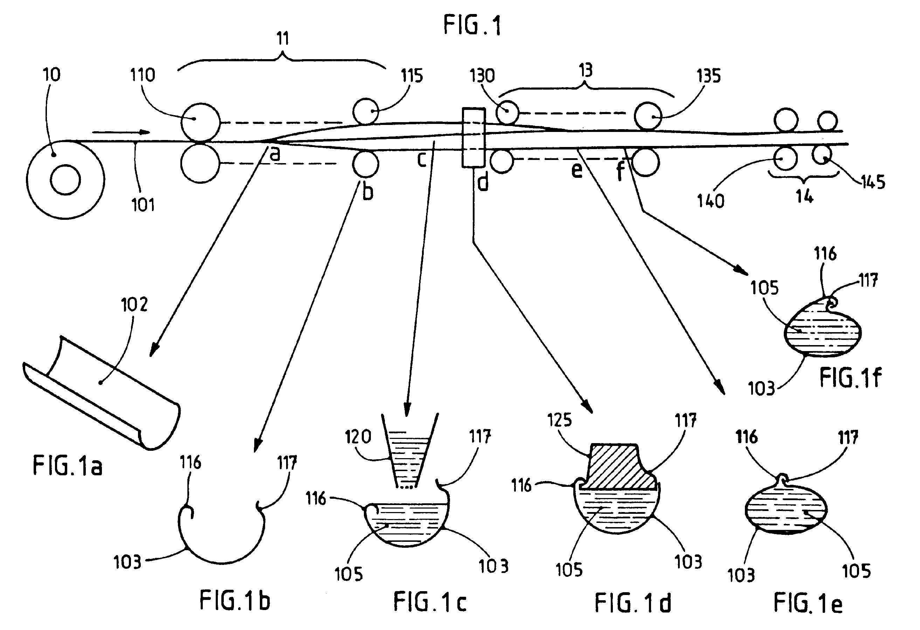

Les figures 1, 1 a à 1 f et 2 de la présente demande permettent de mieux comprendre les caractéristiques de ces produits connus.
Figure 1: procédé connu de formage d'un produit composite.
Figures 1 a à 1f: stades de formage successifs du produit composite par le procédé de la figure 1.
Figure 2: tronçon de produit composite connu obtenu par le procédé de la figure 1.

Le brevet français No. 2 476 542 décrit un procédé de réalisation d'un produit composite tubulaire qui s'applique en particulier à l'introduction d'additifs dans des bains métalliques tels que des poches contenant de l'acier liquide ou des répartiteurs pour la coulée continue.

Ce produit composite tubulaire comporte une enveloppe à l'intérieur de laquelle se trouve une matière qui est une poudre compactée. Dans le cas du traitement de l'acier, cette poudre peut par exemple contenir du calcium.

Ce document décrit un procédé de réalisation de ce produit. Il consiste à préparer une enveloppe tubulaire remplie de la poudre qu'on se propose de compacter puis à diminuer la section droite du produit, à périmètre sensiblement constant. Ainsi, la poudre est compactée sur place tout en lui assurant un excellent maintien. Le même document décrit un mode particulier de réalisation de ce produit.

Ce mode particulier est décrit de façon plus détaillée dans la demande de brevet européen No. 34 994 et en particulier par les figures 1 et 1a à 1f qui sont reproduites dans la présente demande.

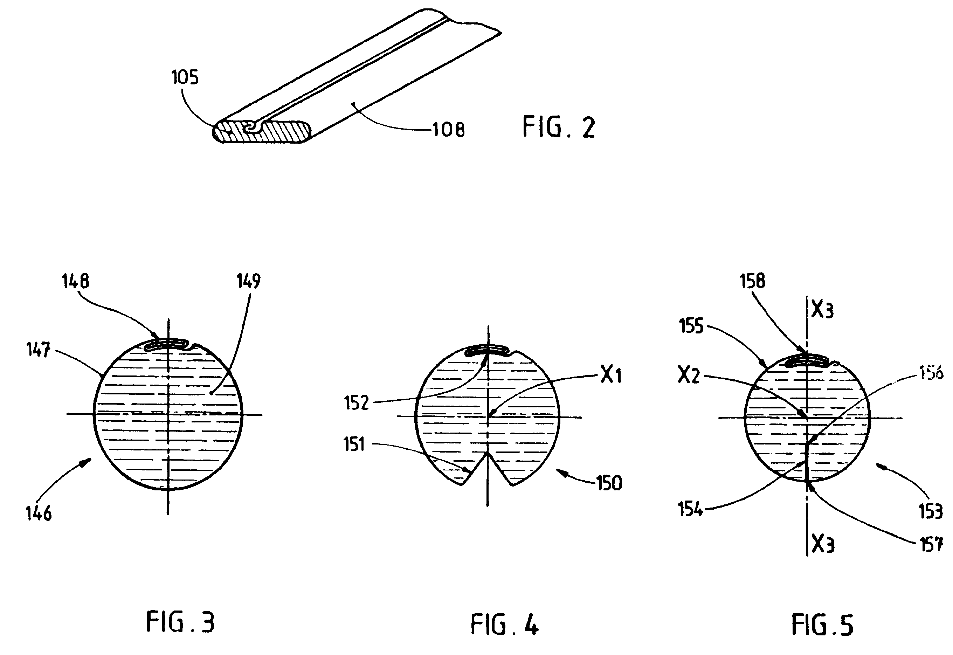

Comme on le voit sur la figure 1, un rouleau (10) délivre une bande métallique (101) à une chaîne de formage continu à froid. Une première série (11) de galets de formage (110-115) commence à déformer la bande en lui donnant un profil creux (102) au point (a), figure 1a. Au point (b), figure 1b, la bande a une section droite en forme de gouttière (103), ses deux bords (116,117) étant conformés pour pouvoir ultérieurement s'attacher l'un à l'autre. Au point (c), figure 1c, une buse distributrice (120) remplit la gouttière (103) par la matière pulvérulente de traitement (105). De préférence, un moyen râcleur (125), figure 1d, égalise le niveau. Une deuxième série (13) de galets (130-135) poursuit le formage. Ces galets rapprochent les bords (116,117) et les agrafent au point (e), figure 1e, puis, de préférence, sertissent la liaison ainsi formée en écrasant le joint des deux bords au point (f), figure 1f. Une troisième série (14) de galets (140-145) déforme l'enveloppe sans allongement axial notable en réalisant une diminution de section, à périmètre constant, la section obtenue présentant deux zones aplaties parallèles comme on le voit dans le cas du tronçon (108) représenté figure 2. Ce produit a approximativement une forme rectangulaire à petits côtés arrondis.

De préférence, la réduction de section effectuée est de l'ordre de 15% au moins.

L'expérience montre que le produit ainsi décrit donne le plus souvent des résultats satisfaisants. Sa section aplatie le rend particulièrement apte à être enroulé sur un tambour puis déroulé au moment de son introduction dans un bain métallique.

Cependant, du fait de cette section aplatie, le produit n'est pas aussi rigide que s'il avait une section circulaire. Cette rigidité peut être insuffisante pour l'introduction du produit en profondeur dans certains bains métalliques de forte densité surtout si ceux-ci sont recouverts par un laitier de forte viscosité.

Pour des applications de ce type, un produit composite de section sensiblement circulaire pourrait, en principe, donner de meilleurs résultats.

Mais le compactage de la matière pulvérulente ou granulaire contenue dans des produits composites de section circulaire présente des difficultés particulières. S'il est effectué de façon insuffisante, cette matière risque de se déplacer à l'intérieur de l'enveloppe. De plus, l'enroulement de tels produits sur des tambours de faible diamètre, puis leur déroulage ultérieur sont relativement difficiles, en particulier si l'opération de compactage a nécessité une déformation plastique importante de l'enveloppe qui la rend plus rigide.

On constate aussi que de tels produits composites de section circulaire ont souvent tendance, au cours de leur déroulage à partir d'un tambour, à se déformer en spirale, ce qui perturbe leur introduction dans les bains métalliques. Si cette déformation en spirale est trop importante, le produit composite ne pénètre pas en profondeur dans le bain mais se recourbe et reste en surface. On peut observer aussi, au cours du déroulage ou au cours du dressage qui précède l'introduction dans le bain métallique d'un produit composite circulaire à enveloppe agrafée, un dégrafage de cette enveloppe qui cesse alors de remplir son rôle protecteur vis-à-vis de la matière qu'elle contient.

On a recherché la possibilité de réaliser un produit composite de grande longueur apte à être enroulé puis déroulé, comportant une enveloppe métallique tubulaire et une âme en une matière pulvérulente ou granulaire compactée à l'intérieur de l'enveloppe, ce produit composite ayant une section droite sensiblement circulaire.

On a recherché aussi la possibilité de supprimer les risques de déformation en spirale d'un tel produit au moment de son déroulage avant introduction dans le bain métallique ainsi que les risques de dégrafage partiel de l'enveloppe lorsque celle-ci est elle-même fermée par agrafage.

La présente invention apporte une solution particulièrement efficace.

La présente invention concerne un produit composite à enveloppe tubulaire de grande longueur, apte à être enroulé puis déroulé, dont l'âme en matière pulvérulente ou granulaire est compactée à l'intérieur de cette enveloppe, la section droite de ce produit étant sensiblement circulaire à l'enveloppe fermée par agrafage comportant au moins un pli, raccordé à la circonférence, fermé sur lui-même, dont l'arête est engagée à l'intérieur de la masse compactée, ledit pli s'étendant sur toute la longueur du produit composite.

De préférence, le pli est parallèle à une génératrice de l'enveloppe circulaire.

De préférence, l'enveloppe du produit composite est fermée par agrafage le long d'une génératrice de celle-ci. De préférence également, le produit comporte un pli fermé situé sensiblement du côté diamétralement opposé à la zone d'agrafage. Avantageusement également, la zone d'agrafage est sertie de façon que les deux bords de l'enveloppe, dans la zone où ils se recouvrent, aient subi une codéformation. De façon également avantageuse, le produit peut comporter, comme mode particulier de sertissage, des indentations dans la zone d'agrafage. Ces indentations sont, de préférence, de petites rainures sensiblement perpendiculaires à la génératrice de l'enveloppe.

Le produit composite peut comporter deux plis fermés répartis de façon symétrique dans la section du produit, par exemple à 120° ou 180° l'un par rapport à l'autre, autour de l'axe du produit.

Pour de très nombreuses applications, la matière pulvérulente ou granulaire contient un ou plusieurs éléments réactifs à l'état libre ou combiné tels que Ca, Ba, Mg, Na, B, Ti, Zr et/ou des métaux des terres rares et/ou d'autres éléments tels que Pb, Bi, Se, Te, S, C. La matière pulvérulente ou granulaire peut aussi contenir d'autres métaux ou éléments non métalliques à l'état libre ou alliés ou associés à d'autres éléments.

La présente invention concerne également un procédé de réalisation de ce produit composite.

Ce procédé consiste à préparer, par une méthode quelconque, une enveloppe tubulaire métallique, de section sensiblement circulaire, à l'intérieur de laquelle est logée une substance pulvérulente ou granulaire non tassée, puis, après fermeture par agrafage de cette enveloppe, à la déformer en creux le long d'au moins une génératrice sans allongement notable, de façon à former au moins un pli ouvert, puis à appliquer, sur la paroi extérieure de cette enveloppe, des forces de pression orientées en direction de l'intérieur du produit composite, de façon à réduire son diamètre extérieur sans l'allonger de façon notable. Cette déformation étant effectuée à périmètre constant, le ou les pli(s) se ferme(nt) progressivement. Les bords extérieurs de ce pli ou de chacun de ces plis se rapprochent l'un de l'autre, au moins un des plis se fermant sur lui-même, l'arête de ce pli se trouvant à l'intérieur de la matière, le pli raccordé à la circonférence étant orienté parallèlement à une génératrice de l'enveloppe et s'étendant sur toute la longueur du produit composite. Cette réduction de diamètre entraîne un compactage correspondant de la matière composite contenue.

De façon préférentielle, on réalise le procédé suivant l'invention en préparant, dans une première phase, un produit composite intermédiaire comprenant une enveloppe métallique formée à partir d'une bande de métal et agrafée suivant une génératrice. Cette enveloppe contient une matière pulvérulente ou granulaire non tassée et sa section est sensiblement circulaire. Un tel produit composite intermédiaire peut être en particulier préparé par le procédé connu décrit plus haut correspondant aux figures 1 et 1a à 1f de la présente demande. La section sensiblement circulaire de ce produit intermédiaire est représentée par la figure 1f et ne doit pas être déformée par les galets (14) de la figure 1. A partir de ce stade, l'enveloppe du produit composite intermédiaire est déformée le long d'une génératrice par des moyens connus tels qu'au moins un galet ou au moins une filière de profil convenable de façon à former, sans allongement notable, un pli ouvert dont l'arête pénètre à l'intérieur de la matière pulvérulente ou granulaire. On effectue ensuite une réduction du diamètre extérieur du produit composite en appliquant, sur la paroi extérieure de l'enveloppe, des forces de pression en direction de l'intérieur jusqu'à ce que les bords extérieurs du pli se rapprochent à proximité l'un de l'autre, les parois latérales de ce pli venant au contact l'une de l'autre, sur une partie au moins de leur surface.

Les dimensions du pli ouvert doivent être déterminées, de préférence, de façon que sa section intérieure corresponde à au moins 15% de la section intérieure du produit composite intermédiaire. Si plusieurs plis sont réalisés, c'est la somme des sections intérieures de ceux-ci qui doit être considérée.

Dans ces conditions, on obtient un produit composite dont la matière contenue a été compactée sans déplacement important et sans allongement sensible du périmètre de l'enveloppe.

De façon avantageuse, l'agrafage de l'enveloppe du produit peut être renforcée par un sertissage. On peut avantageusement améliorer la tenue de la zone sertie en réalisant des indentations qui améliorent la tenue mécanique de la liaison et empêchent en particulier le glissement dans le sens de la génératrice de l'un des bords de l'enveloppe par rapport à l'autre. Les essais montrent que si un tel glissement se produit, en particulier au cours de l'enroulement du produit composite sur un tambour et/ou au cours du déroulage ultérieur, le produit composite peut se mettre en spirale lors de son introduction dans un bain métallique éventuellement recouvert d'un laitier. Ces indentations sont avantageusement réalisées au moyen d'un ou plusieurs galets à bord denté qui roulent sur la zone agrafée de façon que les dents péné- trent plastiquement dans le métal de l'enveloppe. Ces dents ont avantageusement le profil voulu pour former de petites rainures sensiblement perpendiculaires à une génératrice et d'une largeur telle qu'elles recouvrent au moins en majeure partie la zone d'agrafage dans sa largeur.

Les figures 3 à 5 décrivent de façon non limitative un mode particulier de réalisation du produit composite suivant l'invention à partir du produit composite intermédiaire.

La figure 3 représente une section du produit composite intermédiaire utilisé comme produit de départ suivant la présente invention.

La figure 4 montre, suivant la présente invention, la section du produit de la figure 3 après formage d'un pli ouvert.

La figure 5 montre le produit composite suivant la présente invention après fermeture du pli initialement ouvert.

On voit figure 3 ia section (146) du produit composite intermédiaire, de section sensiblement circulaire, auquel est appliquée la méthode de compactage qui fait partie de la présente invention. L'enveloppe (147) de ce produit composite comporte une zone d'agrafage (148) orientée suivant une génératrice. La matière pulvérulente ou granulaire (149) qu'elle contient n'est pas tassée. Des moyens de formage connus permettent d'obtenir la section (150) représentée figure 4. Cette section comporte un pli ouvert (151) situé à l'opposé de la zone d'agrafage (152) par rapport à l'axe (X1) du produit composite. L'angle d'ouverture du pli (151) et sa profondeur sont déterminés en fonction du taux de compactage qu'on se propose de réaliser. Des moyens connus permettent ensuite, en exerçant sur l'enveloppe munie de son pli des pressions radiales, de diminuer le diamètre extérieur tout en refermant le pli. On voit, figure 5, le produit composite compacté (153) ainsi obtenu après fermeture du pli (154), l'enveloppe (155) ayant acquis son diamètre d'utilisation sans variation notable de son périmètre et sans allongement notable suivant l'axe (X2) du produit. L'arête (156) de ce pli est sensiblement parallèle à l'axe (X3). Elle est logée à l'intérieur de la masse compactée. Les parois en regard du pli (154) sont pratiquement au contact l'une de l'autre sur la plus grande partie de leur surface. Elles se raccordent par leurs bords extérieurs à la périphérie du produit composite suivant une génératrice ( 157) diamétralement opposée, par rapport à l'axe (X2), à la zone d'agrafage (158). Ce diamètre (X3-X3) constitue un axe d'inertie préférentiel qui favorise l'enroulement du produit composite compacté ainsi réalisé, puis son déroulage dans des conditions qui minimisent la déformation plastique du métal dans la zone d'agrafage. On minimise ainsi les risques de dégrafage ou de fissuration de l'enveloppe. On minimise aussi les risques de glissement des bords de l'enveloppe l'un sur l'autre dans la zone d'agrafage, ce qui réduit beaucoup les risques de mise en spirale du produit composite lors de son introduction dans un bain métallique.

L'exemple ci-après décrit, de façon quantitative, un mode particulier de réalisation du produit composite suivant l'invention.

On met en oeuvre une bande d'acier doux de 60,5 mm de largeur et 0,4 mm d'épaisseur. La matière granulaire est un alliage Si Ca à 30% de Ca en masse. On réalise, de façon connue, un produit composite intermédiaire dont l'enveloppe présente une zone agrafée de section circulaire de 16,0 mm de diamètre. On réalise ensuite un pli ouvert à l'opposé de la zone d'agrafage qu'on referme ensuite par pression radiale sur les parois de l'enveloppe. On ferme ainsi le pli sur lui-même en réduisant le diamètre extérieur de l'enveloppe à 13,2 mm. Au cours de cette opération, la densité apparente de l'alliage Si Ca passe de 1,61 à 2,08, ce qui représente un accroissement de densité de 29% et qui correspond à une réduction de section du même ordre.

De nombreuses modifications peuvent être apportées au produit et au procédé qui font l'objet de la présente invention. Suivant l'application envisagée, l'enveloppe métallique du produit peut être en un acier, en aluminium ou en tout autre métal ou alliage. L'enveloppe peut comporter plusieurs plis répartis de différentes façons suivant les conditions d'utilisation.

Enfin, une très grande variété de métaux, alliages ou autres éléments ou composés peuvent être utilisés pour constituter la matière pulvérulente ou granulaire qui constitue l'âme du produit composite. Le pli ouvert peut être réalisé par des moyens tels que des galets ou filières de profils convenables ou encore par d'autres moyens et on peut aussi le fermer sur lui-même par d'autres moyens.

## Revendications

1. Produit composite de grande longueur, apte à être enroulé puis déroulé pour son introduction dans un bain métallique pour le traitement de celui-ci, comportant une enveloppe métallique tubulaire et une âme en une matière pulvérulente ou granulaire compactée à l'intérieur de cette enveloppe caractérisé en ce que sa section droite est sensiblement circulaire, l'enveloppe métallique comportant, sur toute sa longueur, une zone de fermeture par agrafage et au moins un pli raccordé à la circonférence, fermé sur lui-même dont l'arête est engagée à l'intérieur de la masse compactée.

2. Produit composite suivant revendication 1 caractérisé en ce que la zone de fermeture par agrafage est orientée parallèlement à une génératrice.

3. Produit composite suivant revendication 1 ou 2 caractérisé en ce qu'il comporte au moins un pli fermé orienté parallèlement à une génératrice.

4. Produit composite suivant l'une des revendications 1 à 3 caractérisé en ce qu'il comporte un pli fermé à l'opposé de la zone d'agrafage par rapport à son axe.

5. Produit composite suivant l'une des revendications 1 à 4 caractérisé en ce que la zone agrafée est sertie.

6. Produit composite suivant revendication 5 caractérisé en ce que la zone sertie comporte des indentations réalisées par déformation plastique du métal de l'enveloppe.

7. Produit composite suivant revendication 6 caractérisé en ce que les indentations sont de petites rainures sensiblement perpendiculaires à la génératrice de l'enveloppe.

8. Produit composite suivant l'une des revendications 1 à 7 caractérisé en ce qu'il contient à l'état libre ou combiné un ou plusieurs éléments tels que Ca, Ba, Mg, Na, B, Ti, Zr et/ou des métaux des terres rares et/ou d'autres éléments tels que Pb, Bi, Se, Te, S, C.

9. Produit composite suivant l'une des revendications 1 à 8 caractérisé en ce que son enveloppe est en acier, ou en aluminium.

10. Procédé de fabrication d'un produit composite de grande longueur, apte à être enroulé puis déroulé pour son introduction dans un bain métallique pour le traitement de celui-ci, comportant une enveloppe métallique tubulaire et une âme en une matière pulvérulente ou granulaire compactée à l'intérieur de cette enveloppe à périmètre sensiblement constant de celle-ci, dans lequel on réalise de façon connue un produit composite intermédiaire comprenant une enveloppe métallique de section sensiblement circulaire contenant une matière pulvérulente ou granulaire non tassée caractérisé en ce qu'après fermeture de ce produit composite intermédiaire par agrafage, on déforme en creux, le long d'au moins une génératrice, cette enveloppe sans que le métal dont elle est constituée soit allongé de façon notable, afin de réaliser au moins un pli ouvert, puis en ce qu'on applique sur la paroi extérieure de cette enveloppe des forces de pression orientées en direction de l'intérieur de façon à réduire son diamètre extérieur sans modifier de façon notable son périmètre, en fermant ainsi au moins un pli sur lui-même, l'arête de ce pli se trouvant à l'intérieur de la matière qui est ainsi compactée et le dit pli raccordé à la circonférence s'étendant sur toute la longueur du produit composite parallèlement à une génératrice de l'enveloppe.

11. Procédé suivant revendication 10 caractérisé en ce que la déformation en creux de l'enveloppe le long d'au moins une génératrice, afin de réaliser au moins un pli ouvert, est effectuée au moyen d'au moins un galet ou d'au moins une filière de profil convenable.

12. Procédé suivant la revendication 10 ou 11 caractérisé en ce que l'enveloppe du produit composite intermédiaire est agrafée le long d'une génératrice.

13. Procédé suivant revendication 12 caractérisé en ce que on réalise un pli ouvert à l'opposé de la zone agrafée par rapport à l'axe du produit.

14. Procédé suivant l'une des revendications 12 ou 13 caractérisé en ce que on effectue sur l'enveloppe un sertissage de la zone agrafée.

15. Procédé suivant revendication 14 caractérisé en ce que lorsque l'enveloppe du produit composite est sertie, des indentations sont réalisées dans la zone sertie par déformation plastique du métal de l'enveloppe.

16. Procédé suivant revendication 15 caractérisé en ce que les indentations sont de petites rainures sensiblement perpendiculaires à la génératrice de l'enveloppe dont la largeur est sensiblement égale à la largeur de la zone d'agrafage.

17. Procédé suivant revendication 15 ou 16 caractérisé en ce qu'on réalise les indentations en faisant rouler au moins un galet dont le bord comporte des dents de profil convenable sur la zone sertie avec une pression suffisante pour obtenir la profondeur de pénétration voulue.

## Patentansprüche

1. Verbundprodukt großer Länge, das eingerollt und dann durch seine Einführung in ein Metallbad zu dessen Behandlung entrollt werden kann, mit einer rohrförmigen Metallhülle und einer Seele aus einem im Inneren dieser Hülle kompaktierten pulverförmigen oder körnigen Material,
dadurch gekennzeichnet,
daß sein Querschnitt etwa kreisförmig ist, wobei die Metallhülle über ihre ganze Länge eine Zone zum Schließen durchFalzverbindung und wenigstens einen am Umfang angeschlossenen, über sich selbst geschlossenen Falz aufweist, dessen Kante in das Innere der kompaktierten Masse eingreift.

2. Verbundprodukt nach Anspruch 1, dadurch gekennzeichnet, daß die Falzverbindungsschließzone parallel zu einer Mantellinie ausgerichtet ist.

3. Verbundprodukt nach Anspruch 1 oder 2, dadurch gekennzeichnet, daß es wenigstens einen parallel zu einer Mantellinie ausgerichteten geschlossenen Falz aufweist.

4. Verbundprodukt nach einem der Ansprüche 1 bis 3, dadurch gekennzeichnet, daß es einen gegenüber der Falzverbindungszone bezüglich seiner Achse angeordneten geschlossenen Falz aufweist.

5. Verbundprodukt nach einem der Ansprüche 1 bis 4, dadurch gekennzeichnet, daß die gefalzte Zone gebördelt ist.

6. Verbundprodukt nach Anspruch 5, dadurch gekennzeichnet, daß die gebördelte Zorie Ausbuchtungen aufweist, die durch plastische Verformung des Metalls der Hülle gebildet sind.

7. Verbundprodukt nach Anspruch 6, dadurch gekennzeichnet, daß die Ausbuchtungen kleine, zur Mantellinie der Hülle etwa senkrechte Rillen sind.

8. Verbundprodukt nach einem der Ansprüche 1 bis 7, dadurch gekennzeichnet, daß es mindestens ein Element, wie Ca, Ba, Mg, Na, B, Ti, Zr und/oder Seltene Erdmetalle und/oder andere Elemente, wie Pb, Bi, Se, Te, S und C frei oder kombiniert enthält.

9. Verbundprodukt nach einem der Ansprüche 1 bis 8, dadurch gekennzeichnet, daß seine Hülle aus Stahl oder Aluminium ist.

10. Verfahren zur Herstellung eines Verbundprodukts großer Länge, das zum Einrollen und dann zum Entrollen durch sein Eintauchen in ein Metallbad zu dessen Behandlung geeignet ist, mit einer rohrförmigen Metallhülle und einer Seele aus einem im Inneren dieser Hülle mit etwa konstantem Umfang derselben kompaktierten pulverförmigen oder körnigen Material, bei dem man in bekannter Weise ein Zwischenverbundprodukt mit einer Metallhülle etwa kreisförmigen Querschnitts, die ein nicht kompaktiertes pulverförmiges oder körniges Material enthält, herstellt, dadurch gekennzeichnet,
daß man nach Schließen dieses Zwischenverbundprodukts durch Falzverbindung diese Hülle längs wenigstens einer Mantellinie hohl verformt, ohne daß das sie bildende Metall merklich verlängert wird, um wenigstens einen offenen Falz herzustellen, daß man dann auf die äußere Wand dieser Hülle Druckkräfte einwirken läßt, die in Richtung nach innen derart ausgerichtet sind, daß ihr Außendurchmesser verringert wird, ohne ihren Umfang merklich zu ändern, wobei man so wenigstens einen Falz über sich selbst schließt, dessen Kante sich im Inneren des Materials befindet, das so kompaktiert wird, und sich der an den Umfang angeschlossene Falz überdie ganze Länge des Verbundprodukts parallel zu einer Mantellinie der Hülle erstreckt.

11. Verfahren nach Anspruch 10, dadurch gekennzeichnet, daß das Hohlumformen der Hülle längs mindestens einer Mantellinie zur Herstellung mindestens eines offenen Falzes mit mindestens einer Rolle oder mindestens einem Nippel mit geeignetem Profil durchgeführt wird.

12. Verfahren nach Anspruch 10 oder 11, dadurch gekennzeichnet, daß die Hülle des Zwischen-Verbundprodukts längs einer Mantellinie zusammengeklammert wird.

13. Verfahren nach Anspruch 12, dadurch gekennzeichnet, daß man einen offenen Falz gegenüber der zusammengeklammerten Zone, bezogen auf die Achse des Produkts, bildet.

14. Verfahren nach einem derAnsprüche 12 oder 13, dadurch gekennzeichnet, daß man an der Hülle ein Bördeln der gefalzten Zone vornimmt.

15. Verfahren nach Anspruch 14, dadurch gekennzeichnet, daß beim Bördeln der Hülle des Verbundprodukts Ausbuchtungen in der gebördelten Zone durch plastisches Verformen des Metalls der Hülle gebildet werden.

16. Verfahren nach Anspruch 15, dadurch gekennzeichnet, daß zur Mantellinie der Hülle etwa senkrechte kleine Rillen als Ausbuchtungen gebildet werden, deren Breite etwa gleich der Breite der Falzverbindungszone ist.

17. Verfahren nach Anspruch 15 oder 16, dadurch gekennzeichnet, daß man die Ausbuchtungen durch Rollen mindestens einer Rolle, deren Rand Zähne mit geeignetem Profil aufweist, auf der gebördelten Zone unter einem solchen Druck, daß die gewünschte Eindringtiefe erreicht wird, herstellt.

## Claims

1. A composite article of great length, capable of being rolled and then unrolled for the introduction thereof into a metal bath for the treatment of same, comprising a tubular metal sheath and a core of a powdery or granular material which is compacted within said sheath characterised in that it is of substantially circular cross-section, the metal sheath thereof comprising over its entire length a hooking closure zone and at least one fold which is connected to the circumference and which is closed on itself and whose edge is engaged in the interior of the compacted mass.

2. A composite article according to claim 1 characterised in that the hooking closure zone is oriented parallel to a generatrix.

3. A composite article according to claim 1 or claim 2 characterised in that it comprises at least one closed fold oriented parallel to a generatrix.

4. A composite article according to one of claims 1 to 3 characterised in that it comprises a closed fold opposite to the hooking zone with respect to the axis thereof.

5. A composite article according to one of claims 1 to 4 characterised in that the hooked zone is crimped.

6. A composite article according to claim 5 characterised in that the crimped zone comprises indentations produced by plastic deformation of the metal of the sheath.

7. A composite article according to claim 6 characterised in that the indentations are small grooves substantially perpendicular to the generatrix of the sheath.

8. A composite article according to one of claims 1 to 7 characterised in that it contains, in the free or combined state, one or more elements such as Ca, Ba, Mg, Na, B, Ti, Zr and/or rare earth metals and/or other elements such as Pb, Bi, Se, Te, S, C.

9. A composite article according to one of claims 1 to 8 characterised in that the sheath thereof is of steel or aluminium.

10. A process for the production of a composite article of great length capable of being rolled and then unrolled for the introduction thereof into a metal bath for the treatment of same, comprising a tubular metal sheath and a core of powdery or granular material which is compacted within said sheath, with a substantially constant periphery of the sheath, wherein an intermediate composite article comprising a metal sheath of substantially circular section containing a non-consolidated powdery or granular material is produced in known manner, characterised in that after closure of said intermediate composite article by hooking said sheath is deformed in a hollow configuration along at least one generatrix without the metal of which the sheath is made being subjected to substantial elongation, in order to produce at least one open fold, and that then are applied to the outside wall of said sheath pressure forces which are directed towards the interior so as to reduce its outside diameterwithoutsubstan- tially modifying its periphery, thus closing at least one fold on to itself, the edge of said fold being disposed in the interior of the material which is thus compacted and said fold which is connected to the circumference extending over the entire length of the composite article, parallel to a generatrix of the sheath.

11. A process according to claim 10 characterised in that deformation of the sheath in a hollow configuration along at least one generatrix in order to produce at least one open fold is effected by means of at least one roller or at least one die of suitable configuration.

12. A process according to claim 10 or claim 11 characterised in that the sheath of the intermediate composite article is hooked along a generatrix.

13. A process according to claim 12 characterised by producing an open fold opposite to said hooked zone with respect to the axis of the article.

14. A process according to one of claims 12 and 13 characterised in that crimping of said hooked zone is effected on the sheath.

15. A process according to claim 14 characterised in that when the sheath of the composite article is crimped, indentations are produced in said crimped zone by plastic deformation of the metal of the sheath.

16. A process according to claim 15 characterised in that the indentations are small grooves which are substantially perpendicular to the generatrix of the sheath, the width of which is substantially equal to the width of the hooking zone.

17. A process according to claim 15 or claim 16 characterised in that the indentations are made by rolling at least one roller whose edge has teeth of suitable configuration overthe crimped zonewith a sufficient pressure to produce the desired depth of penetration.
